# EUROPEAN PATENT APPLICATION

(11) **EP 1 757 827 A2**
(43) Date of publication of application: **28.02.2007**
(21) Application number: 06254395.4
(22) Date of filing: 22.08.2006
(51) Int. Cl.: F16C 33/02

(54) **Fluid bearing**

(30) Priority: 23.08.2005 JP 2005241673
(71) Applicant: FANUC LTD, Minamitsuru-gun, Yamanashi 401-0597 (JP)
(72) Inventor: Kawai, Tomohiko, Minamitsuru-gun, Yamanashi, 401-0304 (JP); Ebihara, Kenzo, -mura,Minamitsura-gun,Yamanashi 401-0511 (JP); Minami, Hiroshi, room 11-302, -mura,Minamitsura-gun,Yamanashi 401-0511 (JP)
(74) Representative: Billington, Lawrence Emlyn

(57) **Abstract**

A fluid bearing that dampens without requiring a special braking device, and further, without affecting the fluid bearing surfaces. A slide member that is guided by a guide member so as to move linearly is supported by fluid bearing surfaces. The guide member protrudes from the bottom of an opening provided in the bottom of the slide member and its side wall surfaces function as braking surfaces that press against the braking surfaces of the slide member. When fluid of an adequate pressure is supplied to the fluid bearing surfaces, the slide member deforms, a gap appears between the braking surfaces, and further, the slide member, which is supported by the fluid bearing surfaces, enters a state of non-contact with the guide member and the movement of the slide member is damped, thus making it possible to obtain a fluid bearing that can dampen movement without requiring a special braking device, and further, without scratching the bearing surfaces.

## Description

### BACKGROUND OF THE INVENTION

### 1. Field of the Invention

The present invention relates to a fluid bearing.

### 2. Description of the Related Art

Normally, in order to stop the operation of rotary bodies or linear motion bodies such as rotary shafts, rotary tables and linear motion slides, a braking device is used. The braking device stops the movement of the rotary body or linear motion body by pressing a brake shoe or a brake band and a brake pad against a member such as a brake drum or a brake disk that rotates or moves linearly as a single unit together with the rotary body or the linear motion body.

At the same time, as a bearing for the rotating body or the linear motion body, a fluid bearing that contactlessly supports moving parts using a fluid under pressure is well known. In the braking of such a rotary body or a linear motion body using this fluid bearing as well, a braking device is commonly used.

In addition, a method is known in which, in a mechanism that supports a slide member with a hydrostatic bearing and slides a slide member, when the rigidity of the bearing is weakened and pressurized fluid is supplied to the bearing, the bearing elastically deforms and a gap is formed between the bearing and a ram to smoothen the slide of the slide mechanism and the supply of pressurized fluid is stopped, causing the deformation of the bearing to disappear and the bearing to tighten on the slide member so as to constrict the movement of the slide member and providing braking, and a slide device is known in which a guided member is provided on a table that moves while being guided by a guide base, such that, when a hydrostatic bearing is formed between the bottom of the table and the top of the guide pedestal as well as between the guided member and the guide base and pressurized fluid is supplied to the hydrostatic bearing, a gap is formed between the bottom of the table and the top of the guide base so as to raise the table, and further, when the guided member elastically deforms to form a gap between the guided member and the guide base so as to permit the table to move while being guided in the direction of movement of the table and the supply of pressurized fluid is stopped, the weight of the table causes the bottom of the table to contact the top of the guide base, and moreover, the deformation of the guided member disappears and the guided member and the guide base contact each other so as to dampen the movement of the table (for example, JP 06-094031A).

However, providing a braking device for the rotary shaft and linear motion slide moving members as is commonly used conventionally has proportionate disadvantages in terms of cost and in terms of efficient use of space.

With respect to the foregoing point, the slide device described in JP 06-094031A utilizes hydrostatic bearing pressurized fluid in a structure in which a guide surface of the hydrostatic bearing is compressed, and does not provide a special braking device. However, since the guide surfaces of the fluid bearing forms the braking surfaces, in the course of countless compressing and braking actions the guide surfaces becomes scratched, uneven and warped, causing a risk of the fluid bearing surface biting or of operational accuracy deteriorating.

### SUMMARY OF THE INVENTION

The present invention provides a fluid bearing capable of braking without requiring a special braking device and without affecting fluid bearing surfaces.

According to one aspect of the present invention, the fluid bearing comprises: a slide member having a bearing surface; and a guide member having a bearing surface for supporting and guiding the slide member linearly movably with fluid supplied between the bearing surfaces of the guide member and the slide member, wherein at least one of the slide member and the guide member has a deformable portion that deforms with pressure of the fluid supplied between the bearing surfaces, and both of the slide member and the guide member have braking surfaces provided separate from the bearing surfaces to come in contact with each other when pressure of the fluid supplied between at least part of the bearing surfaces is decreased below a predetermined value such that deformation of the deformable portion is reduced. When fluid of sufficient pressure is supplied between the bearing surfaces of the slide member and the guide member, a gap appears between the braking surfaces, and the slide member becomes movably supported in non-contact with the guide member. When the pressure of the fluid is decreased, the braking surfaces press against each other to brake the movement of the slide member.

According to another aspect of the present invention, the fluid bearing comprises: a rotary member having a bearing surface; and a stationary member having a bearing surface for rotatably supporting the rotary member with fluid supplied between the bearing surfaces of the stationary member and the rotary member, wherein at least one of the rotary member and the stationary member has a deformable portion that deforms with pressure of the fluid supplied between the bearing surfaces, and both of the rotary member and the stationary member have braking surfaces provided separate from the bearing surfaces to come in contact with each other when pressure of the fluid supplied between at least par of the bearing surfaces is decreased below a predetermined value such that deformation of the deformable portion is reduced. When fluid of sufficient pressure is supplied between the bearing surfaces of the rotary member and the stationary member, a gap appears between the braking surfaces, and the rotary member becomes rotatably supported in non-contact with the stationary member. When the pressure of the fluid is decreased, the braking surfaces press against each other to brake the rotation of the rotary member.

As a result, the present invention achieves a fluid bearing that operates simply by adjusting the pressure of the fluid that is supplied under pressure to the fluid bearing, without the need for a special braking device, and that is capable of braking simply and at low cost.

In addition, since the braking surface is provided separately from the bearing surface of the fluid bearing, there is no risk of the fluid bearing surface biting or of operational accuracy deteriorating.

### BRIEF DESCRIPTION OF THE DRAWINGS

FIG. 1 is a diagram showing a schematic perspective view of a first embodiment of the present invention, in which the fluid bearing of the present invention is adapted to a linear motion slide;
FIGS. 2a and 2b are diagrams illustrating the operation of the fluid bearing of the present invention using central sectional views of the first embodiment;
FIG. 3 is a diagram showing a schematic perspective view of a second embodiment of the present invention, in which the fluid bearing of the present invention is adapted to the bearing of a rotary member; and
FIGS. 4a and 4b are diagrams illustrating the operation of the fluid bearing of the present invention using central sectional views cut along the central axis of rotation of a rotary member of the second embodiment.

### DETAILED DESCRIPTION

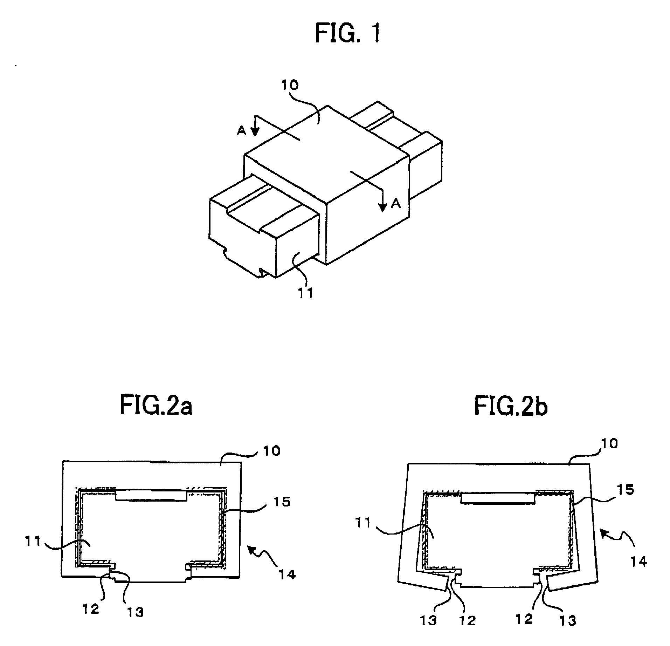

FIG. 1 is a diagram showing a schematic perspective view of a first embodiment of the present invention, in which the fluid bearing of the present invention is adapted to a linear motion slide. FIGS. 2a and 2b are diagrams showing sectional views along a central line A-A shown in FIG. 1, in which FIG. 2a shows a state when pressurized fluid is not supplied and FIG. 2b shows a state when fluid of an adequate pressure is supplied.

A slide member 10 is formed so as to enclose a guide member 11 except for a portion of the bottom edge thereof, with opposed surfaces of the slide member 10 and the guide member 11 forming fluid bearing surfaces 15 (indicated by hatching in FIGS. 2a and 2b), such that the slide member 10 is supported by the guide member 11.

A portion of the bottom of the guide member 11 protrudes from an opening in the bottom edge of the slide member 10, so that lateral wall surfaces of the protruding portion of the guide member 11 and corresponding inner lateral wall surfaces of the opening in the slide member 10 are disposed opposite each other, so as to form braking surfaces 12, 13, In other words, the lateral wall surfaces of the protruding guide member 11 form guide member side braking surfaces 12 and the inner lateral wall surfaces of the opening in the slide member 10 form slide member side braking surfaces 13. In addition, so that these two braking surfaces 12, 13 are alternatively pressed against and separated from each other by the pressure of a fluid supplied to the fluid bearing surfaces 15, in this embodiment a deformable portion 14 is provided in the slide member 10.

As shown in FIG. 2a, in a state in which pressurized fluid is not supplied to the fluid bearing surfaces 15, the braking surface 12 of the guide member 11 and the braking surface (the inner lateral wall surfaces) 13 of the slide member 10 contact each other. However, when fluid of a pressure adequate to cause the fluid bearing surfaces 15 to act as a fluid bearing is supplied, as shown in FIG. 2b the deformable portion 14 of the slide member 10 defonns under the pressure of the fluid bearing, putting both braking surfaces 12, 13 in a state of non-contact. In addition, by decreasing the pressure of the fluid supplied to all or a portion of the fluid bearing surfaces 15, as shown in FIG. 2a the amount of deformation of the slide member 10 decreases, the slide member side braking surface 13 contacts the guide member side braking surface 12 and the slide member 10 is damped. The fluid bearing surfaces 15 are of such dimensions as to not contact each other at this time. In addition, the deformable portion 14 is formed on the slide member 10 so as to deform so that the braking surfaces (inner lateral wall surfaces) 13 of the slide member 10 separate from the guide member side braking surfaces 12 as shown in FIG. 2b when fluid of an adequate pressure is supplied to the fluid bearing surfaces 15.

In this first embodiment of the present invention, the dimensions and materials of each portion of the slide member 10 are designed so that the deformable portion 14 deforms under pressure from the inside toward the outside when fluid of an adequate pressure is supplied to the fluid bearing surfaces 15. As a result, when fluid of an adequate pressure is supplied to the fluid bearing surfaces 15, the braking surfaces 13 of the inner lateral wall surfaces separate from the braking surfaces 12 of the slide member 10. It should be noted that, in FIG. 2b, for descriptive convenience the extent of the deformation of the slide member 10 is exaggerated. The actual extent of the gap that appears between both braking surfaces 12 and 13 due to the deformation of the slide member 10 is on the order of several µm to several tens of *µ*m.

When fluid of an adequate pressure is supplied to the fluid bearing surfaces 15, as shown in FIG. 2b the slide member 10 is supported in a contactless state by the guide member 11 and the slide member 10 is permitted to move in a straight line along the guide member 11. By contrast, when stopping the slide member 10 moving linearly, decreasing the pressure of the fluid supplied to the fluid bearing surfaces 15 below a certain value causes the deformation of the deformable portion 14 of the slide member 10 either to decrease or to disappear, returning the deformable portion 14 of the slide member 10 to its original position and, as shown in FIG. 2a, contacting both braking surfaces 12, 13 against each other, braking the linear motion of the slide member 10 and stopping the slide member 10. At this time, the braking surfaces (inner lateral wall surfaces) 13 of the slide member 10 contact the braking surfaces 12, but contact with the fluid bearing surfaces 15 at the sides of the slide member 10 is prevented by both braking surfaces 12, 13 contacting each other, so that there is virtually no contact. In addition, contact between the top of the guide member 11 and the fluid bearing surface 15 and the bottom of the interior of the slide member 10 is also similarly prevented by both braking surfaces 12, 13 contacting each other, so that such contact is slight. As a result, the fluid bearing surfaces 15 are not scratched, made uneven or warped, and consequently, there is no risk of the fluid bearing surface biting or of operational accuracy deteriorating. By greatly decreasing the pressure of the pressurized fluid supplied to the lateral (the sides of the guide member 11) and bottom surface portions of the fluid bearing surfaces 15 and decreasing the pressure of the pressurized fluid at the top surface portion of the fluid bearing surfaces 15 (the top of the guide member 11) to a level such as to support the weight of the slide member 10, a braking action can be effected by the pressed contact between the two braking surfaces 12, 13 without any contact between the fluid bearing surfaces 15 of the top of the guide member 11 and the inner bottom side of the slide member 10.

It should be noted that, although in the first embodiment described above the guide member 11 is fixed and the slide member 10 moves, alternatively, the slide member 10 may be fixed and treated as the stationary member while the guide member 11 is made into the moving member. In other words, in FIG. 1, reference numeral 10 may be used to indicate the fixed member and reference numeral 11 the moving member, such that the fixed member 10 guides the moving member 11.

In addition, although in the embodiment described above the deformable portion that is deformed by the pressurized fluid is provide on the slide member, alternatively the deformable portion may be provided on either the slide member or the guide member or on both the slide member and the guide member, such that, when fluid of an adequate pressure is supplied to the fluid bearing surfaces, this deformable portion deforms so as to permit a gap to be formed between the two braking surfaces.

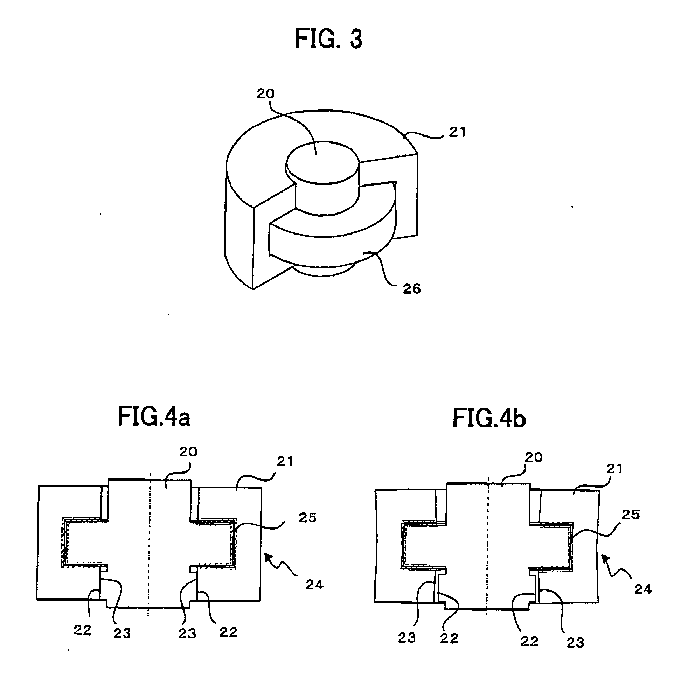

FIG. 3 is a diagram showing a schematic perspective view of a second embodiment, in which the fluid bearing of the present invention is adapted to the bearing of a rotary member. FIGS. 4a and 4b are diagrams illustrating the operation of the fluid bearing of the present invention using central sectional views cut along the central axis of rotation of the rotary member, in which FIG. 4a represents a state when pressurized fluid is not supplied to the fluid bearing surfaces of the rotary member and FIG. 4b shows a state in which fluid of a pressure adequate to cause the fluid bearing surfaces to function as a fluid bearing is supplied to the fluid bearing surfaces 15 of the rotary member.

A disc part 26 with a portion of expanded diameter is provided on a rotary shaft that comprises a rotary member 20. A stationary member 21 provided with surfaces disposed opposite the top and bottom as well as the periphery of the disc part 26 is provided, such that the top and bottom as well as the periphery of the disc part 26 comprise fluid bearing surfaces (portions indicated by hatching in FIGS. 4a and 4b) and the rotary member 20 is supported by the stationary member 21 through this fluid bearing. A braking surface 22 is provided on a portion of the periphery of the rotary member 20 (in the embodiments shown in the drawings, the lower peripheral surface in FIGS. 3, 4a and 4b), with the inner peripheral surface of the stationary member 21 disposed opposite this braking surface 22 and comprising stationary member side braking surface 23. In the state shown in FIG. 4a, in which pressurized fluid is not supplied to the fluid bearing surfaces 25, the two braking surfaces 22, 23 press against and contact each other. The dimensions of the fluid bearing surfaces 25 are designed so that no contact between them arises in this state.

In addition, the dimensions of each part of the stationary member 21 are designed so that a deformable portion 24 deforms and a gap appears between the two braking surfaces 22, 23 as shown in FIG. 4b when fluid of an adequate pressure is supplied to the fluid bearing surfaces 25. In other words, when fluid of an adequate pressure is supplied to the fluid bearing surfaces 25, that pressurized fluid causes an upward force to be exerted on the stationary member 21 at the position of the top edge surface of the disc part 26 of the rotary member 20 in FIG. 4b, a downward force to be exerted on the stationary member 21 at the bottom edge of the disc part 26 of the rotary member 20, and further, a force expanding in the radial direction at the periphery of the disc part 26. As a result, the deformable portion 24 of the stationary member 21 deforms, causing top and bottom openings in the stationary member 21 to expand and separating the stationary member side braking surfaces 23 from the rotary member side braking surfaces 22 and putting the two braking surfaces in a contactless state. In addition, at the fluid bearing surfaces 25 as well, a gap appears between the stationary member 21 and the rotary member 20, enabling the rotary member 20 to be rotatably supported by the stationary member 21 in a contactless state. It should be noted that, in FIG. 4b, for descriptive convenience the extent of the deformation of the stationary member 21 is exaggerated, and the actual extent of the gap between the braking surfaces 22 and 23 is on the order of several *µ*m.

Thus, as described above, when fluid of an adequate pressure is supplied to the fluid bearing surfaces 25, as shown in FIG. 4b, the rotary member 20 is rotatably supported in a contactless state by the stationary member 21. By decreasing the pressure of the fluid supplied to part or all of the fluid bearing surfaces 25, the extent of the deformation of the stationary member 21 decreases as shown in FIG. 4a and the two braking surfaces 22, 23 are pressed together, braking the rotation of the rotary member 20.

It should be noted that, in this second embodiment as well, the rotary member 20 and the stationary member 21 may be reversed. In other words, in FIGS. 3, 4a and 4b, reference numeral 20 may be used to indicate the stationary member and reference numeral 21 the rotary member. In addition, the deformable portion may be provided on either the rotary member or the stationary member, or on both the rotary member and the stationary member.

## Claims

1. A fluid bearing comprising:
a slide member having a bearing surface; and
a guide member having a bearing surface for supporting and guiding said slide member linearly movably with fluid supplied between the bearing surfaces of the guide member and said slide member,
wherein at least one of said slide member and said guide member has a deformable portion that deforms with pressure of the fluid supplied between the bearing surfaces, and both of said slide member and said guide member have braking surfaces provided separate from the bearing surfaces to come in contact with each other when pressure of the fluid supplied between at least part of the bearing surfaces is decreased below a predetermined value such that deformation of said deformable portion is reduced.

2. A fluid bearing comprising:
a rotary member having a bearing surface; and
a stationary member having a bearing surface for rotatably supporting said rotary member with fluid supplied between the bearing surfaces of the stationary member and said rotary member,
wherein at least one of said rotary member and said stationary member has a deformable portion that deforms with pressure of the fluid supplied between the bearing surfaces, and both of said rotary member and said stationary member have braking surfaces provided separate from the bearing surfaces to come in contact with each other when pressure of the fluid supplied between at least part of the bearing surfaces is decreased below a predetermined value such that deformation of said deformable portion is reduced.
